# EUROPÄISCHE PATENTSCHRIFT

(11) **EP 3 380 216 B1**
(45) Veröffentlichungstag und Bekanntmachung des Hinweises auf die Patenterteilung: **13.09.2023**
(21) Anmeldenummer: 16809284.9
(22) Anmeldetag: 23.11.2016
(51) Int. Cl.: B29L 31/14, B29C 65/00, B29C 69/00, B01D 61/14, B01D 63/02, B01D 63/06, B01D 65/00, B01D 61/18, B01D 69/04, B01D 69/08, B29C 45/00, B29C 65/18, B29C 45/14, B29C 57/10

(54) **ROHRFÖRMIGES FILTERMEMBRAN-ELEMENT UND VERFAHREN ZU SEINER HERSTELLUNG**
TUBULAR FILTER MEMBRANE ELEMENT, AND METHOD FOR THE PRODUCTION THEREOF
ÉLÉMENT À MEMBRANE FILTRANTE DE FORME TUBULAIRE ET SON PROCÉDÉ DE FABRICATION

(30) Priorität: 25.11.2015 DE 102015015159
(43) Veröffentlichungstag der Anmeldung: 03.10.2018
(73) Patentinhaber: FrieslandCampina Nederland B.V., 3818 LE Amersfoort (NL)
(72) Erfinder: AUFDERHEIDE, Kai, 32257 Bünde (DE); VAN DRUTEN, Wiebe, 6700 AE Wageningen (DE); OPPERS, Albert, 5469 AH Erp (NL)
(74) Vertreter: V.O.
(86) Internationale Anmeldenummer: PCT/EP2016/001972
(87) Internationale Veröffentlichungsnummer: WO 2017/088975

(56) Entgegenhaltungen:
- EP-A2- 0 299 182
- DE-A1- 3 240 143
- DE-A1-102005 004 372
- KR-A- 20150 076 504
- US-A- 4 956 089
- US-A- 6 103 119
- US-A1- 2004 020 845
- US-A1- 2006 138 038
- US-B1- 6 485 735

## Beschreibung

Die Erfindung betrifft ein Filtermembran-Element zur Mikrofiltration, mit einem Membranröhrchen-Abschnitt aus Kunststoff, der an seinem einen axialen Ende verschlossen ist und an seinem entgegengesetzten axialen Ende ein Adapterteil aus Kunststoff aufweist.

Ferner betrifft die Erfindung ein Verfahren zur Herstellung eines entsprechenden rohrförmigen Filtermembran-Elementes.

Bei der Mikrofiltration erfolgt die Abscheidung von Partikeln überwiegend an der Oberfläche einer porösen Membran. Die Membran weist Poren oder Durchlässe sehr geringen Durchmessers auf, so dass die abzuscheidenden Partikel die Membran nicht durchdringen können. Die fluide Phase einer zu filtrierenden Suspension kann die Membran dann durchströmen, während die Partikel zurückgehalten werden.

Eine entsprechende Membran kann alternativ auch dazu genutzt werden, ein Fluidstrom, beispielsweise ein Luftstrom in eine Vielzahl von Einzelströmen zu unterteilen, was beispielsweise ein Aufschäumen in der Flüssigkeit, insbesondere Milch, vorteilhaft ist. Im Folgenden wird beispielhaft davon ausgegangen, dass die Membran zur Mikrofiltration verwendet wird, jedoch ist die Erfindung darauf nicht beschränkt.

Rohrförmige Membrane werden häufig in der sogenannten dynamischen Mikrofiltration eingesetzt. Ein rohrförmiges Filtermembran-Element wird an seinem einen axialen Ende verschlossen und an seinem entgegengesetzten axialen Ende mit einem vorgefertigten Adapterteil aus Kunststoff versehen. Bei dem Adapterteil kann es sich beispielsweise um eine Anschlussbuchse für eine Fluidleitung oder ein sonstiges für den Gebrauch des Filtermembran-Elementes notwendiges Funktionsteil handeln. Die zu filtrierende Suspension kann entweder in den Innenraum des rohrförmigen Filtermembran-Elementes eingeleitet werden, wobei die fluide Phase der Suspension die Wandung des Filtermembran-Elementes durchströmt und auf dessen Außenseite abgeführt wird, während die Partikel in dem Filtermembran-Element verbleiben. Häufig wird jedoch eine umgekehrte Strömung bevorzugt, d.h. die zu filtrierende Suspension steht außenseitig des rohrförmigen Filtermembran-Elementes an und die fluide Phase durchdringt die Wandung des Filtermembran-Elementes, gelangt in dessen Innenraum und wird von dort abgeführt, während die ausgefilterten Partikel außenseitig des Filtermembran-Elementes verbleiben.

In Abhängigkeit von der Größe und insbesondere dem Innendurchmesser des rohrförmigen Filtermembran-Elementes werden diese auch als Kapillarmembrane oder bei sehr kleinem Innendurchmesser auch als Hohlfasermembrane bezeichnet.

Die Durchflussmenge eines einzelnen rohrförmigen Filtermembran-Elementes ist aufgrund der sehr kleinen Dimensionen gering, so dass es üblich ist, eine Vielzahl von rohrförmigen Filtermembran-Elementen zu einem sogenannten Filtermembran-Modul zusammenzufassen. Dabei ist jedes Filtermembran-Element mit einem Adapterteil versehen. Da die Adapterteile einzeln an jeweils einen Membranröhrchen-Abschnitt angebracht werden müssen, ist die Herstellung eines Filtermembran-Elementes und insbesondere eines aus vielen Filtermembran-Elementen bestehenden Filtermembran-Moduls sehr aufwändig und kostenintensiv. Darüber hinaus muss sichergestellt sein, dass das vorgefertigte Adapterteil sicher und in abgedichteter Weise auf dem Membranröhrchen-Abschnitt angebracht wird, weshalb aufwändige Qualitätskontrollen notwendig sind.

Der Membranröhrchen-Abschnitt jedes einzelnen Filtermembran-Elementes muss manuell an einem Ende verschlossen werden. Auch dies ist sehr aufwändig und somit kostenintensiv. Darüber hinaus muss sichergestellt sein, das der Membranröhrchen-Abschnitt an seinem Ende zuverlässig verschlossen ist, so dass keine Kurzschlussströmung auftritt. Auch dies erfordert eine aufwändige Qualitätskontrolle.

Aus der DE 10 2005 004 372 A1 ist es bekannt, ein vorgefertigtes Membranröhrchen in eine Spritzgussform einzulegen und dort mit einem endseitigen formstabilen Kunststoffteil zu versehen, das an dem Membranröhrchen angespritzt ist. Über das Verschließen des Membranröhrchen-Abschnitts am axial entgegengesetzten Ende ist nichts ausgesagt.

Aus der KR 2015-0076504 A ist ein Verfahren bekannt, bei dem Membranröhrchen mittels Heiß-Stempel oder Klebeverfahren an ihrem freien Ende verschlossen werden.

Der Erfindung liegt die Aufgabe zugrunde, ein Verfahren zur Herstellung eines rohrförmigen Filtermembran-Elementes insbesondere zur Mikrofiltration zu schaffen, mit dem sich ein zu verschließender Endabschnitt des Membranröhrchen-Abschnitts zuverlässig und in einfacher Weise verschließen lässt. Darüber hinaus soll ein Filtermembran-Element geschaffen werden, bei dem ein gutes Durchströmungsverhalten gegeben ist.

Hinsichtlich des Verfahrens wird die oben genannte Aufgabe durch ein Verfahren mit den Merkmalen des Anspruchs 1 gelöst. Dabei ist u.a. vorgesehen, dass der Membranröhrchen-Abschnitt an seinem einen axialen Ende verschlossen wird, indem er mit diesem Ende mit einem Heiß-Stempel in Anlage gebracht und zu einer gewünschten Gestalt umgeformt wird. Zur Herstellung des Membranröhrchen-Abschnitts wird ein Abschnitt vorbestimmter Länge von einem Membranröhrchen-Strang, d.h. einem sogenannten Endlos-Material eines aus Kunststoff bestehenden schlauchartigen Röhrchens abgeschnitten, das eine Wandung gewünschter Durchlässigkeit, beispielsweise eine Mikroperforation besitzt. Dieser Abschnitt vorbestimmter Länge ist zunächst an seinen beiden axialen Enden offen. Dabei wird der Membranröhrchen-Abschnitt an seinem einen axialen Ende verschlossen, indem er an diesem Ende mit einem Heiß-Stempel in Anlage gebracht wird. Bei dem Heiß-Stempel kann es sich um ein mit einer Formgebungskontur versehenes metallenes Bauteil handeln, das auf eine Temperatur gebracht wird, bei der das Material des Membranröhrchen-Abschnittes anschmilzt und soweit verformbar wird, dass es durch Pressen oder Stauchen fluiddicht verschlossen ist. Dabei wird das axiale Ende des Membranröhrchen-Abschnitts zusätzlich in eine sich in axialer Richtung verjüngende Form, umgeformt.

Im Rahmen dieser Beschreibung bezieht sich der Begriff "axial" auf die Längsachse des Membranröhrchen-Abschnittes, während der Begriff "radial" eine Richtung senkrecht dazu definiert.

Zudem wird der Membranröhrchen-Abschnitt während das Verschließens seines einen axialen Endes auf einen Dorn positioniert und auf diesem gehalten, während das Verschließen mittels des Heiß-Stempels erfolgt.

Vorzugsweise wird das zu verschließende Ende des Membranröhrchen-Abschnitts in eine Ausnehmung des Heiß-Stempels eingeführt, wobei die Ausnehmung vorzugsweise eine zu der gewünschten Gestalt des verschlossenen axialen Endes komplementäre Form aufweist. Beispielsweise kann die Ausnehmung eine sich konisch vertiefende und insbesondere spitz zulaufende Form besitzen. Auf diese Weise ist es möglich, an dem Membranröhrchen-Abschnitt an seinem verschlossenen Ende eine sich in axialer Richtung konisch verjüngende Form auszubilden.

Weiter ist vorgesehen, dass der Membranröhrchen-Abschnitt während des Verschließens des axialen Endes und insbesondere während des Eingriffs in die Ausnehmung des Heiß-Stempels um seine Längsachse rotiert wird. Auf diese Weise kann ein Anhaften des Membranröhrchen-Abschnittes an der Oberfläche des Heiß-Stempels vermieden werden. Alternativ oder zusätzlich dazu ist vorgesehen, dass der Heiß-Stempel während des Verschließens des axialen Endes des Membranröhrchen-Abschnitts rotiert wird.

Das Adapterteil wird nicht vorgefertigt und später an den ebenfalls vorgefertigten Membranröhrchen-Abschnitt angebracht, sondern die Herstellung des Adapterteils und dessen Anbringung an den Membranröhrchen-Abschnitt kann in einem gemeinsamen Verfahrensschritt erreicht werden, indem das Adapterteil an den Membranröhrchen-Abschnitt angespritzt wird. Auf diese Weise ist nicht nur eine sehr schnelle und kostengünstige Herstellung des rohrförmigen Filtermembran-Elementes möglich, sondern es ist auch sichergestellt, dass für die Verbindung zwischen dem Adapterteil und dem Membranröhrchen-Abschnitt eine gleichbleibende Qualität gegeben ist.

Der Membranröhrchen-Abschnitt wird vorgefertigt und dann in eine Kavität einer Spritzgussvorrichtung eingesetzt. Dabei kann vorgesehen sein, dass der Membranröhrchen-Abschnitt auf einen Positionierdorn angeordnet bzw. auf diesen aufgesetzt wird. Das Aufsetzen auf den Positionierdorn kann außerhalb der Spritzgussvorrichtung geschehen, woraufhin dann der Positionierdorn mit dem aufgesetzten Membranröhrchen-Abschnitt in die Spritzgussvorrichtung eingesetzt wird. Alternativ ist es jedoch auch möglich, dass der Positionierdorn in der Spritzgussvorrichtung angeordnet und der Mem-branröhrchen-Abschnitt auf diesen aufgesetzt wird.

Während des Spritzgussvorgangs ist der Membranröhrchen-Abschnitt von dem Positionierdorn gehalten, d.h. an einer Bewegung in innerhalb der Kavität der Spritzgussvorrichtung gehindert. Vorzugsweise sitzt der Membranröhrchen-Abschnitt unter enger Passung auf dem Positionierdorn. In einer möglichen Ausgestaltung kann vorgesehen sein, dass der Außendurchmesser des Positionierdorns um ein geringes Maß größer als der Innendurchmesser des Membranröhrchen-Abschnittes ist, so dass Membranröhrchen-Abschnitt unter geringer elastischer radialer Verformung auf den Positionierdorn aufgesetzt und auf diesen gehalten wird. Die axiale Positionierung des Membranröhrchen-Abschnitts auf den Positionierdorn erfolgt vorzugsweise mittels eines Anschlags.

In bevorzugter Ausgestaltung der Erfindung ist vorgesehen, dass der Positionierdorn einen Aufnahmeabschnitt, auf den der Membranröhrchen-Abschnitt aufgeschoben wird, und einen axial dazu versetzt angeordneten vergrößerten Dornabschnitt aufweist. Der vergrößerte Dornabschnitt besitzt gegenüber dem Aufnahmeabschnitt einen vergrößerten Durchmesser, wobei zwischen dem Aufnahmeabschnitt und dem vergrößerten Dornabschnitt vorzugsweise eine Stufe gebildet ist, die als Anschlag zur axialen Positionierung des Membranröhrchen-Abschnitts auf dem Positionierdorn dient.

Nachdem der Membranröhrchen-Abschnitt in die Kavität der Spritzgussvorrichtung eingesetzt und diese geschlossen ist, wird in üblicher Weise eine Kunststoff-Schmelze durch einen Zuführkanal in die Kavität eingeleitet. Erfindungsgemäß kann vorgesehen sein, dass die Mündung des Zuführkanals so ausgerichtet ist, dass der aus der Mündung des Zuführkanals austretende Strahl der Kunststoff-Schmelze nicht auf den Membranröhrchen-Abschnitt, sondern auf den Positionierdorn mit Abstand zum Membranröhrchen-Abschnitt auftritt. Auf diese Weise ist verhindert, dass der Spritzdruck bzw. die infolge der zugeführten Kunststoff-Schmelze auftretenden dynamischen Belastungen zu einer Schädigung des sehr dünnen und damit empfindlichen Membranröhrchen-Abschnitts führen. Die Kunststoff-Schmelze kann radial zur Längsachse des Positionierdorns bzw. des Membranröhrchen-Abschnitts in die Kavität eingespritzt werden, was dazu führt, dass die Kunststoff-Schmelze direkt auf den Positionierdorn und insbesondere den vergrößerten Dornabschnitt auftrifft. Der Positionierdorn kann die dabei auftretenden punktuellen Belastungen problemlos aufnehmen und dient weiterhin dazu, dass die Kunststoff-Schmelze umgelenkt wird, ohne den Mem-branröhrchen-Abschnitt übermäßig zu belasten.

Alternativ dazu kann auch vorgesehen sein, dass die Kunststoff-Schmelze nicht exakt radial, d.h. direkt auf die Längsachse des Positionierdorns gerichtet, sondern mit Versatz dazu und insbesondere tangential aufgebracht wird.

In Weiterbildung der Erfindung kann vorgesehen sein, dass der Zuführkanal stromauf zu seiner Mündung in der Kavität in zumindest zwei Zweig-Kanäle unterteilt ist. In diesem Fall besitzt der Zuführkanal nicht eine einzige Mündung in der Kavität, sondern aufgrund der Aufteilung in die Zweig-Kanäle wird die Kunststoff-Schmelze durch die Zweig-Kanäle in strömungstechnisch paralleler Ausrichtung in die Kavität eingebracht. Auf diese Weise können einerseits übermäßig hohe punktuelle Lasten beim Einbringen der Kunststoff-Schmelze verhindert werden, andererseits ist durch die Aufteilung in mehrere Zweig-Kanäle sichergestellt, dass die Kavität zuverlässig und vollständig mit dem Kunststoff-Material gefüllt wird.

Auch ist bei der Ausgestaltung der Erfindung vorgesehen, dass das Adapterteil mit dem Membranröhrchen-Abschnitt verschweißt wird. Verschweißen im Sinne dieser Erfindung bedeutet, dass die Kunststoff-Materialien und die Verfahrensparameter so aufeinander abgestimmt sind, dass das Kunststoff-Material des Membranröhrchen-Abschnitts und das Kunststoff-Material des Adapterteils während des Spritzgussvorgangs eine molekulare Verbindung eingehen, die zu einer unlösbaren, stoffschlüssigen Verbindung der beiden Teile führt. Hinsichtlich des Filtermembran-Elementes wird die oben genannte Aufgabe dadurch gelöst, dass der Membranröhrchen-Abschnitt an seinem verschlossenen Ende eine in axialer Richtung sich konisch verjüngende Form aufweist. Eine konisch spitz zulaufende Form des Membranröhrchen-Abschnitts an seinem mittels des Heiß-Stempels verschlossenen Ende hat sich als vorteilhaft erwiesen, um einerseits einen Fluidstau im Inneren des Membranröhrchen-Abschnittes weitestgehend zu vermeiden und um andererseits eine gute Fluidströmung zu gewährleisten.

Das Adapterteil ist an den Membranröhrchen-Abschnitt angespritzt und ist mit diesem verschweißt.

Bei dem Adapterteil handelt es sich um eine Anschlussbuchse für eine Fluidleitung.

Weitere Einzelheiten und Merkmale der Erfindung sind aus der folgenden Beschreibung eines Ausführungsbeispiels unter Bezugnahme auf die Zeichnung ersichtlich.

Es zeigen:
- Fig. 1: einen Längsschnitt durch ein Filter-Membranelement,
- Fig. 2: eine 1. Phase der Herstellung eines Membranröhrchen-Abschnitts,
- Fig. 3: eine 2. Phase der Herstellung des Membranröhrchen-Abschnitts,
- Fig. 4: eine 3. Phase der Herstellung des Membranröhrchen-Abschnitts,
- Fig. 5: eine 4. Phase der Herstellung des Membranröhrchen-Abschnitts,
- Fig. 6: einen Vertikalschnitt durch eine Spritzgussvorrichtung nach Einbringung der Kunststoff-Schmelze und
- Fig. 7: den Schnitt VII-VII in Figur 6.

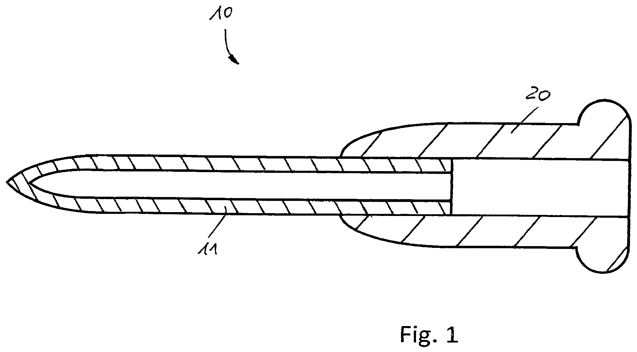

Figur 1 zeigt ein rohrförmiges Filtermembran-Element 10 zur Mikrofiltration. Das Filtermembran-Element 10 besitzt einen Membranröhrchen-Abschnitt 11 aus Kunststoff, der an seinem einen, gemäß Figur 1 linken axialen Ende unter Bildung einer sich in axialer Richtung konisch verjüngenden Form verschlossen ist und an seinen entgegengesetzten, gemäß Figur 1 rechten Ende mit einem Adapterteil 20 aus Kunststoff verbunden ist, das eine Anschlussbuchse für eine Fluidleitung bildet. Der Membranröhrchen-Abschnitt 11 besteht aus einem durchlässigen Kunststoffmaterial, wobei die Durchlässigkeit entweder durch eine grundsätzliche Porigkeit des Materials und/oder durch eine nachträglich eingebrachte Perforation gebildet sein kann.

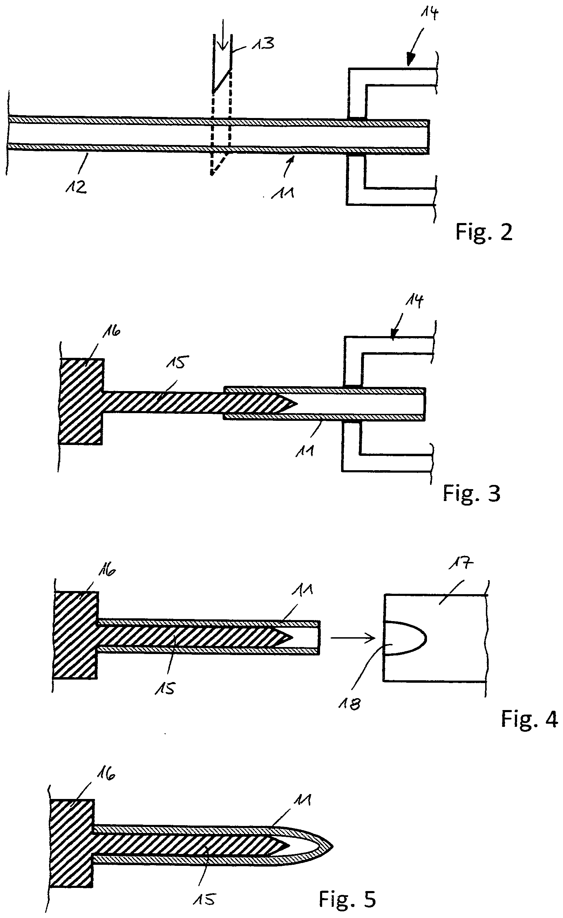

Im Folgenden wird anhand der Figuren 2 bis 7 die Herstellung des rohrförmigen Filtermembran-Elementes 10 in einzelnen Schritten erläutert.

Das Grundmaterial des Membranröhrchen-Abschnitts 11 ist ein schlauchartiger Membranröhrchen-Strang 12, d.h. ein sogenanntes "endloses" Material. Der Membranröhrchen-Strang 12 wird an seinem freien Ende mittels eines nur schematisch angedeuteten Greifers 14 ergriffen und fixiert, woraufhin mit Hilfe eines Messers 13 ein Membranröhrchen-Abschnitt 11 vorbestimmter Länge von dem Membranröhrchen-Strang 12 abgetrennt wird.

Der Membranröhrchen-Abschnitt 11 ist weiterhin mittels des Greifers 14 ergriffen und wird von diesem auf einen stiftartigen Dorn 15 aufgeschoben, bis das dem Greifer 14 abgewandte Ende des Membranröhrchen-Abschnitts 11 an einem Anschlag 16 des Dorns 15 anliegt. Der Membranröhrchen-Abschnitt 11 wird auf den Dorn 15 über Reibung und gegebenenfalls unter elastischer Aufweitung gehalten. Dieser Zustand ist in Figur 3 dargestellt.

Das dem Anschlag 16 abgewandte freie axiale Ende des Mem-branröhrchen-Abschnitts 11 wird anschließend mit einem Heiß-Stempel 17, der eine konische bzw. halb-ellipsoide Ausnehmung 18 besitzt, in Anlage gebracht, wie es durch den Pfeil in Figur 4 angedeutet ist. Der Heiß-Stempel 17 ist auf eine Temperatur erwärmt, die das Material des Membranröhrchen-Abschnitts 11 aufweicht und zumindest anschmilzt. Indem das freie Ende des Membranröhrchen-Abschnitts in die Ausnehmung 18 des Heiß-Stempels 17 hineingedrückt wird, wird dieses Ende des Membranröhrchen-Abschnitts 11 einerseits verschlossen und gleichzeitig zu einer gewünschten Kontur, beispielsweise einer spitz zulaufenden Kontur geformt, wie es in Figur 5 dargestellt ist.

Während das zu verschließende axiale Ende des Membranröhrchen-Abschnitts 11 mit der Ausnehmung 18 des Heiß-Stempels in Kontakt steht, werden der Dorn 15 zusammen mit dem Membranröhrchen-Abschnitt 11 und/oder der Heiß-Stempel 17 um die Längsachse des Membranröhrchen-Abschnittes 11 rotiert, um ein Anhaften des Membranröhrchen-Abschnittes 11 an dem Heiß-Stempel 17 zu vermeiden.

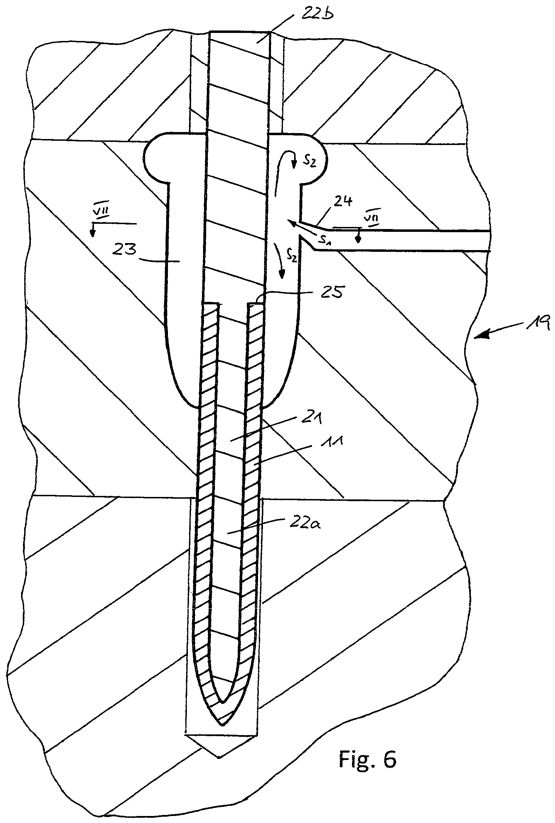

Der vorgefertigte, an einem axialen Ende verschlossene Membranröhrchen-Abschnitt 11 wird dann in eine Spritzgussvorrichtung 19 eingebracht, wie sie schematisch in Figur 6 dargestellt ist. Die Spritzgussvorrichtung 19 besitzt einen stiftartigen Positionierdorn 21, der einen endseitigen Aufnahmeabschnitt 22a besitzt, auf den der Membranröhrchen-Abschnitt 11 unter elastischer Aufweitung aufgeschoben wird. An den Aufnahmeabschnitt 22a des Positionierdorns 21 schließt sich ein vergrößerter Dornabschnitt 22b an, der einen vergrößerten Außendurchmesser besitzt, wobei im Übergangsbereich zwischen dem Aufnahmeabschnitt 22a und dem vergrößerten Dornabschnitt 22b eine Abstufung gebildet ist, die einen Anschlag 25 bildet, an dem das offene Ende des Membranröhrchen-Abschnitts 11 anschlägt.

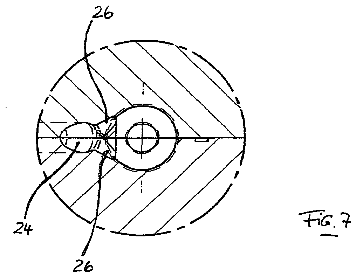

Nach Schließen der Spritzgussvorrichtung 19 ist der dem verschlossenen axialen Ende entgegengesetzte Endbereich des Membranröhrchen-Abschnitts 11 und der daran anschließende Bereich um den vergrößerten Dornabschnitt 22b des Positionierdorns 21 herum von einem Formhohlraum bzw. einer Kavität 23 umgeben. Ein Zuführkanal 24 für eine Kunststoff-Schmelze mündet in die Kavität 23. Wie Figur 7 zeigt, ist der Zuführkanal 24 unmittelbar vor Einmündung in die Kavität 23 in zwei Zweig-Kanäle 26 unterteilt, die jeweils in die Kavität 23 münden.

In Figur 6 ist angedeutet, dass die Mündung des Zuführkanals 24 bzw. der Zweig-Kanäle 26 so ausgerichtet ist, dass die durch die Mündung in die Kavität 23 eintretende Kunststoff-Schmelze nicht unmittelbar auf den Membranröhrchen-Abschnitt 11, sondern auf die Außenseite des vergrößerten Dornabschnitts 22b des Positionierdorns 21 auftrifft, wie es durch den Pfeil S₁ angedeutet ist. Von dort prallt die Kunststoff-Schmelze zurück und verteilt sich in der Kavität 23, wie es durch die Pfeile S₂ angedeutet ist.

Die Kunststoff-Schmelze verschweißt mit dem Kunststoff-Material des Membranröhrchen-Abschnitts 11 und ist mit diesem somit über eine molekulare Bindung fest verbunden.

Nach Öffnen der Spritzgussvorrichtung 19 ist das in Figur 1 dargestellte Filtermembran-Element 10 gebildet, bei dem der Innenraum des Membranröhrchen-Abschnitts 11 durch das hülsenförmige Adapterteil 20 hindurch zugänglich ist.

## Patentansprüche

1. Verfahren zur Herstellung eines rohrförmigen Filtermembran-Elementes (10) zur Mikrofiltration, wobei ein Membranröhrchen-Abschnitt (11) aus Kunststoff an seinem einen axialen Ende verschlossen und an dem entgegengesetzten axialen Ende mit einem Adapterteil (20) aus Kunststoff versehen wird,
wobei der Membranröhrchen-Abschnitt (11) aus einem durchlässigen Kunststoffmaterial besteht,
wobei die Durchlässigkeit entweder durch eine grundsätzliche Porigkeit des Materials und/oder durch eine nachträgliche eingebrachte Perforation gebildet ist,
wobei der Membranröhrchen-Abschnitt (11) in einer Kavität (23) einer Spritzgussvorrichtung (19) auf einem Positionierdorn (21) angeordnet und von diesem während des Spritzgussvorgangs gehalten wird,
**dadurch gekennzeichnet, dass**
das Adapterteil (20) an den Membranröhrchen-Abschnitt (11) angespritzt wird,
wobei das Adapterteil (20) in Form einer Anschlussbuchse für eine Fluidleitung ausgebildet wird,
wobei das Adapterteil (20) mit dem Membranröhrchen-Abschnitt (11) verschweißt wird,
wobei der Membranröhrchen-Abschnitt (11) an seinem einen axialen Ende verschlossen wird, indem er mit diesem Ende mit einem Heiß-Stempel (17) in Anlage gebracht und zu einer gewünschten Gestalt umgeformt wird,
wobei an dem Membranröhrchen-Abschnitt (11) an seinem verschlossenen Ende eine sich in axialer Richtung konisch verjüngende Form ausgebildet wird,
wobei der Membranröhrchen-Abschnitt (11) während des Verschließens seines einen axialen Endes auf einem Dorn (15) positioniert ist, und wobei der Membranröhrchen-Abschnitt (11) während des Verschließens des axialen Endes um seine Längsachse rotiert wird und/oder dass der Heiß-Stempel (17) während des Verschließens des axialen Endes des Membranröhrchen-Abschnitts (11) rotiert wird.

2. Verfahren nach Anspruch 1, **dadurch gekennzeichnet, dass** der Membranröhrchen-Abschnitt (11) unter enger Passung auf dem Positionierdorn (21) sitzt.

3. Verfahren nach Anspruch 1 oder 2, **dadurch gekennzeichnet, dass** der Positionierdorn (21) einen Aufnahmeabschnitt (22a), auf den der Membranröhrchen-Abschnitt (11) aufgeschoben wird, und einen axial dazu versetzt angeordneten vergrößerten Dornabschnitt (22b) aufweist.

4. Verfahren nach Anspruch 3, **dadurch gekennzeichnet, dass** eine Kunststoff-Schmelze durch einen Zuführkanal (24) in die Kavität (23) eingeleitet wird, wobei die Mündung des Zuführkanals (24) so ausgerichtet ist, dass die Kunststoff-Schmelze auf den Positionierdorn (21) mit Abstand zum Membranröhrchen-Abschnitt (11) auftrifft.

5. Verfahren nach Anspruch 4, **dadurch gekennzeichnet, dass** die Kunststoff-Schmelze auf den vergrößerten Dornabschnitt (22b) auftrifft.

6. Verfahren nach einem der Ansprüche 4 oder 5, **dadurch gekennzeichnet, dass** der Zuführkanal (24) stromauf der Mündung in der Kavität (23) in zumindest zwei Zweig-Kanäle (26) unterteilt ist.

7. Verfahren nach einem der Ansprüche 1 bis 6, **dadurch gekennzeichnet, dass** das zu verschließende Ende des Membranröhrchen-Abschnitts (11) in eine Ausnehmung (18) des Heiß-Stempels (17) eingeführt wird.

8. Filtermembran-Element (10), hergestellt nach einem Verfahren gemäß einem der Ansprüche 1 bis 7, mit einem Membranröhrchen-Abschnitt (11) aus Kunststoff, der an seinem einen axialen Ende verschlossen ist und an seinem entgegengesetzten axialen Ende ein Adapterteil (20) aus Kunststoff aufweist, wobei der Membranröhrchen-Abschnitt (11) aus einem durchlässigen Kunststoffmaterial besteht und wobei die Durchlässigkeit entweder durch eine grundsätzliche Porigkeit des Materials und/oder durch eine nachträglich eingebrachte Perforation gebildet ist, wobei das Adapterteil (20) an den Membranröhrchen-Abschnitt (11) angespritzt ist, **dadurch gekennzeichnet, dass** der Membranröhrchen-Abschnitt (11) an seinem verschlossenen Ende eine sich in axialer Richtung konisch verjüngende Form aufweist, der Membranröhrchen-Abschnitt (11) mit dem Adapterteil (20) verschweißt ist und dass das Adapterteil (20) eine Anschlussbuchse für eine Fluidleitung ist.

## Claims

1. Method for producing a tubular filter membrane element (10) for microfiltration, wherein a membrane tube portion (11) composed of plastic is closed at its one axial end and is provided at the opposite axial end with an adapter part (20) composed of plastic,
wherein the membrane tube portion (11) is composed of a permeable plastics material,
wherein the permeability is formed either by a fundamental porosity of the material and/or by a subsequently introduced perforation,
wherein the membrane tube portion (11) is arranged in a cavity (23) of an injection-moulding device (19) on a positioning mandrel (21) and is held by said mandrel during the injection-moulding process,
**characterized in that**
the adapter part (20) is injection-moulded onto the membrane tube portion (11),
wherein the adapter part (20) is configured in the form of a connection socket for a fluid line,
wherein the adapter part (20) is welded to the membrane tube portion (11),
wherein the membrane tube portion (11) is closed at its one axial end by virtue of this end of said portion being brought into abutment with a hot die (17) and being shaped into a desired shape,
wherein a form which tapers conically in an axial direction is formed at the closed end of the membrane tube portion (11),
wherein the membrane tube portion (11) is positioned on a mandrel (15) during the closing of its one axial end, and
wherein the membrane tube portion (11) is rotated about its longitudinal axis during the closing of the axial end,
and/or **in that** the hot die (17) is rotated during the closing of the axial end of the membrane tube portion (11) .

2. Method according to Claim 1, **characterized in that** the membrane tube portion (11) sits with a close fit on the positioning mandrel (21).

3. Method according to Claim 1 or 2, **characterized in that** the positioning mandrel (21) has a receiving portion (22a), onto which the membrane tube portion (11) is pushed, and an enlarged mandrel portion (22b) which is arranged axially offset relative thereto.

4. Method according to Claim 3, **characterized in that** a plastics melt is introduced into the cavity (23) through a feed channel (24), wherein the opening of the feed channel (24) is oriented such that the plastics melt impinges on the positioning mandrel (21) with a spacing to the membrane tube portion (11).

5. Method according to Claim 4, **characterized in that** the plastics melt impinges on the enlarged mandrel portion (22b).

6. Method according to either of Claims 4 and 5, **characterized in that** the feed channel (24) is divided into at least two branch channels (26) upstream of the opening in the cavity (23).

7. Method according to one of Claims 1 to 6, **characterized in that** that end of the membrane tube portion (11) which is to be closed is introduced into a recess (18) of the hot die (17).

8. Filter membrane element (10) produced by a method according to one of Claims 1 to 7, comprising a membrane tube portion (11) composed of plastic which is closed at its one axial end and has an adapter part (20) composed of plastic at its opposite axial end, wherein the membrane tube portion (11) is composed of a permeable plastics material and wherein the permeability is formed either by a fundamental porosity of the material and/or by a subsequently introduced perforation, wherein the adapter part (20) is injection-moulded onto the membrane tube portion (11), **characterized in that** the membrane tube portion (11) has, at its closed end, a form which tapers conically in the axial direction, the membrane tube portion (11) is welded to the adapter part (20), and **in that** the adapter part (20) is a connection socket for a fluid line.

## Revendications

1. Procédé de fabrication d'un élément formant membrane filtrante tubulaire (10) destiné à la microfiltration, une portion de tube de membrane (11) en matière synthétique étant fermée à sa première extrémité axiale et munie d'une pièce d'adaptation (20) en matière synthétique à l'extrémité axiale opposée,
la portion de tube de membrane (11) étant en une matière synthétique perméable,
la perméabilité étant formée par une porosité fondamentale de la matière et/ou par une perforation ménagée ultérieurement,
la portion de tube de membrane (11) étant disposée dans une cavité (23) d'un dispositif de moulage par injection (19) sur un mandrin de positionnement (21) et étant maintenue par celui-ci pendant le processus de moulage par injection,
**caractérisé en ce que**
la pièce d'adaptation (20) est moulée sur la portion de tube de membrane (11),
la pièce d'adaptation (20) est conçue sous la forme d'une douille de raccordement destinée à une conduite de fluide,
la pièce d'adaptation (20) étant soudée à la portion de tube de membrane (11),
la portion de tube de membrane (11) étant fermée à sa première extrémité axiale **en ce qu'**elle est amenée avec cette extrémité en appui avec un poinçon à chaud (17) et mise en forme à une forme souhaitée,
la portion de tube de membrane (11), au niveau de son extrémité fermée, ayant une forme qui se rétrécit coniquement dans la direction axiale,
la portion de tube de membrane (11) étant positionnée sur un mandrin (15) lors de la fermeture de sa première extrémité axiale, et
la portion de tube de membrane (11) étant mise en rotation sur son axe longitudinal pendant la fermeture de l'extrémité axiale
et/ou que le poinçon à chaud (17) est mis en rotation lors de la fermeture de l'extrémité axiale de la portion de tube de membrane (11).

2. Procédé selon la revendication 1, **caractérisé en ce que** la portion de tube de membrane (11) repose avec un ajustement serré sur le mandrin de positionnement (21).

3. Procédé selon la revendication 1 ou 2, **caractérisé en ce que** le mandrin de positionnement (21) comporte une portion de réception (22a) sur laquelle la portion de tube de membrane (11) est poussée et une portion de mandrin agrandie (22b) disposée de manière décalée axialement par rapport à celle-ci.

4. Procédé selon la revendication 3, **caractérisé en ce qu'**une matière synthétique fondue est introduite dans la cavité (23) par un canal d'alimentation (24), l'embouchure du canal d'alimentation (24) étant orientée de telle manière que la matière synthétique fondue est incidente au mandrin de positionnement (21) à distance de la portion de tube de membrane (11).

5. Procédé selon la revendication 4, **caractérisé en ce que** la matière synthétique fondue est incidente à la portion de mandrin agrandie (22b).

6. Procédé selon l'une des revendications 4 ou 5, **caractérisé en ce que** le canal d'alimentation (24) en amont de l'embouchure dans la cavité (23) est divisé en au moins deux canaux de dérivation (26).

7. Procédé selon l'une des revendications 1 à 6, **caractérisé en ce que** l'extrémité de la portion de tube de membrane (11) à fermer est introduite dans un évidement (18) du poinçon à chaud (17).

8. Élément de membrane filtrante (10), réalisé par un procédé selon l'une des revendications 1 à 7, ledit élément comprenant une portion de tube de membrane (11) en matière synthétique qui est fermée à sa première extrémité axiale et qui comporte à son extrémité axiale opposée une pièce d'adaptation (20) en matière synthétique, la portion de tube de membrane (11) étant en une matière synthétique perméable et la perméabilité étant formée par une porosité fondamentale de la matière et/ou par une perforation ménagée ultérieurement, la pièce d'adaptation (20) étant moulée sur la portion de tube de membrane (11), **caractérisé en ce que** la portion de tube de membrane (11) a une forme qui se rétrécit en cône dans la direction axiale à son extrémité fermée, la portion de tube de membrane (11) est soudée à la pièce d'adaptation (20) et la pièce d'adaptation (20) est une douille de raccordement destinée à une conduite de fluide.
